# EUROPEAN PATENT APPLICATION

(11) **EP 1 154 590 A1**
(43) Date of publication of application: **14.11.2001**
(21) Application number: 00410047.5
(22) Date of filing: 09.05.2000
(51) Int. Cl.: H04B 10/10

(54) **Infrared local area network**

(71) Applicant: Hewlett-Packard Company, A Delaware Corporation, Palo Alto, CA 94304 (US)
(72) Inventor: Brebner, Gavin, 38410 St Martin d'Uriage (FR); Vicard, Dominique, 38190 Bernin (FR); Richard, Bruno, 38920 Crolles (FR)
(74) Representative: Lloyd, Richard Graham

(57) **Abstract**

The present invention relates to an infrared LAN. At least one infrared transponder is integrated in a device which connects to a standard lamp socket existing in every room. The device may be a light bulb or an adapter placed between the light bulb and the socket. The transmitters/receivers needed by the computers will preferably be standard infrared printer ports, equipping all modern laptop computers.

## Description

### Field of the Invention

The present invention relates to local area networks (LANs), and in particular to infrared LANs.

### Background of the Invention

LANs comprise a number of computers most often interconnected through cables and network interface cards. The installation of the cables is however a hassle. Therefore, wireless solutions are examined, especially in the cases where roaming laptop users need to exchange data with other such users or connect to a corporate network in changing locations.

One such solution is disclosed in US patent N° 4,975,926. It uses infrared data transmission between computers.

Figure 1 schematically illustrates a LAN as disclosed in this patent. A number of infrared transponders 10 are fixed to the ceiling or walls close to a number of computers 12. Each computer 12 is equipped with an infrared transmitter/receiver 14. These devices 14 are separate from the computers and have an orientable head intended to be directed to one of the transponders.

Each transponder 10 is intended to retransmit in all directions a modulated infrared beam it receives from any direction. Moreover, it is coupled to similar transponders through a network cable.

Such a LAN, although it does not require network cables to be provided between the computers, still requires a relatively complex installation of the transponders. The transponders require the drilling of holes and screwing in order to be secured and power supply cables must be installed.

Moreover, the computers must be equipped with relatively cumbersome and costly transmitters/receivers.

### Summary of the Invention

The present invention is directed to providing an infrared LAN overcoming the above drawbacks.

To achieve this, each infrared transponder is integrated in a device which connects to a standard lamp socket existing in every room. The device may be a light bulb or an adapter placed between the light bulb and the socket. The transmitters/receivers needed by the computers will preferably be standard infrared printer ports, equipping all modern laptop computers.

The infrared LAN thus comprises at least one such infrared transponder arranged in a wall or ceiling socket, and at least one computer equipped with infrared transmission and reception means within the vision angle of the transponder.

According to an embodiment, the LAN comprises an infrared transmission and reception device located within the vision angle of the transponder and coupled to a wired LAN.

According to an embodiment, a mirror is arranged to suitably orient the infrared beams exchanged between a printer port of the computer and the transponder.

According to an embodiment, the mirror is in the form of a flap pivotally attached to the computer.

According to an embodiment, the mirror has a light dispersing surface.

The foregoing and other objects, features, aspects and advantages of the invention will become apparent from the following detailed description of embodiments of the present invention when taken in conjunction with the accompanying drawings.

### Brief Description of the Drawings

Figure 1 schematically shows a conventional infrared network;
Figure 2 schematically shows an exemplary infrared network according to the invention;
Figure 3 shows an embodiment of an infrared transponder according to the invention, integrated in a light bulb adapter; and
Figure 4 shows solutions enabling easy use of standard laptop infrared printer ports in a network according to the invention.

### Best Mode of Carrying Out the Invention

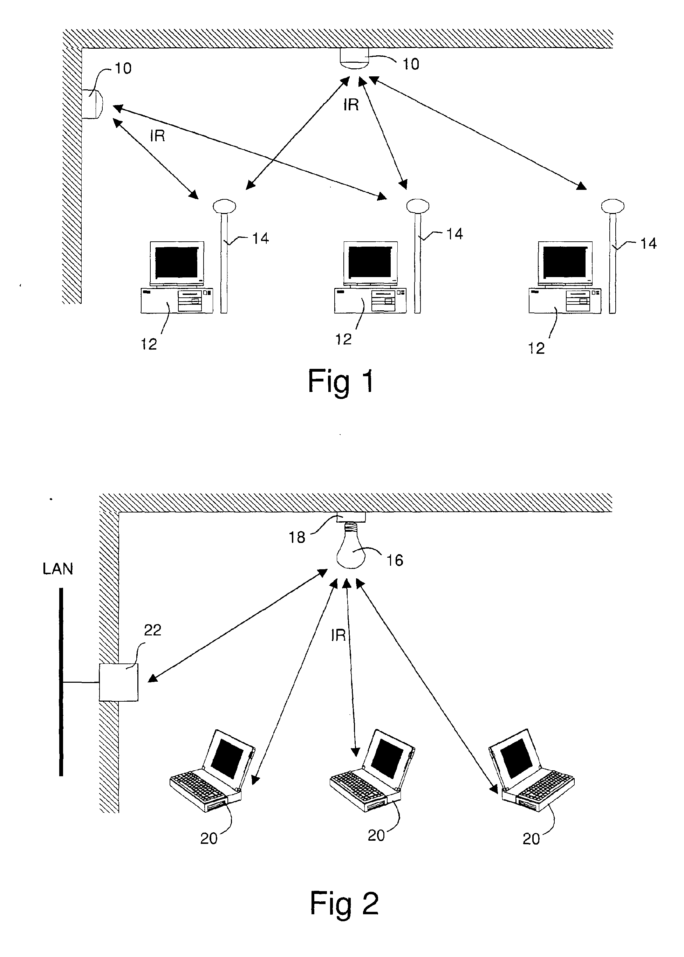

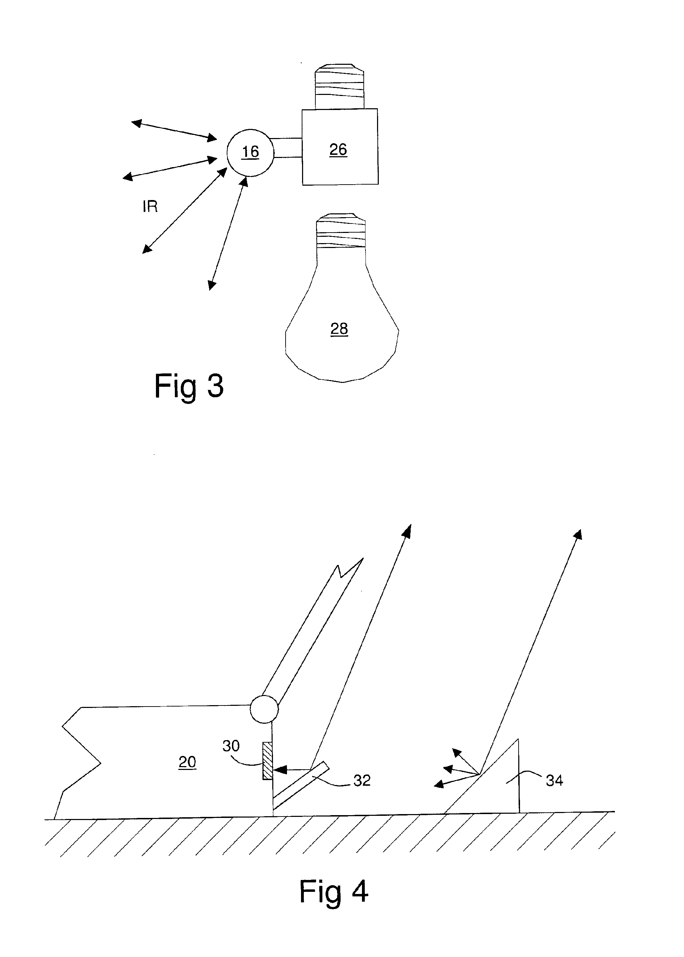

In figure 2, a room in which an infrared LAN is to be set up, is equipped with at least one infrared transponder 16. The transponder 16 connects to a standard light bulb socket 18 normally provided in every room, preferably in the ceiling. To illustrate this, the transponder is shown in the form of a light bulb screwed into its socket. The transponder may indeed be integrated within a light bulb, if the light bulb is of a "cold" type (neon light). Another embodiment of a transponder will be described later with reference to figure 3.

The transponder 16 only has an infrared repeating function, i.e. detect the modulated infrared beams that come to it and retransmit them downward. For this purpose it requires at least one large angle infrared detector, at least one large angle infrared LED, amplifier circuitry between the detector and the LED, and power supply circuitry adapting the mains power taken from the light bulb socket to the voltage required by the amplifier circuitry. Such circuitry is conventional and will not be described in more detail.

The computers 20 forming part of the network will be equipped with suitable infrared transmission/reception devices. Such devices are preferably standard components of the computers, such as the infrared printer ports equipping all modern laptops and even recent desktops. Indeed, it will then not be necessary to buy additional equipment to have an infrared LAN enabled computer. The only thing to do would be a software upgrade of the printer port driver so that it can emulate a standard network interface card.

However, existing infrared printer ports are usually arranged for horizontal infrared transmission, whereas the infrared transponder 16 is placed at the ceiling, i.e. above the computer. This requires the computer to be reoriented by the user so that the transponder and the infrared port "see" each other. A solution for overcoming this problem is described later in relation with Figure 4.

As shown in figure 2, the infrared LAN may be completed by a relay transmitter/receiver 22 connected to a conventional cable LAN 24. The purpose of this relay is to provide the users of the infrared LAN access to corporate network services, such as e-mail, Internet, etc. Relay 22 is arranged to exchange modulated infrared beams with transponder 16, converting incoming infrared beams (from computers 20) to standard packets placed on the cable network, and converting packets from the cable network to outgoing infrared beams.

Figure 3 illustrates a preferred embodiment of an infrared transponder according to the invention. The transponder 16 is part of an adapter 26 intended to be placed between a conventional light bulb 28 and its socket. As shown, transponder 16 is offset from the body of adapter 26 so that opaque portions of the adapter and bulb 28 do not reduce the angular coverage of the transponder.

Although one transponder element 16 is shown in figure 3, several such elements may be arranged about adapter 26 to improve the angular coverage, should bulb 28 be opaque.

Figure 4 illustrates a solution that may be employed to overcome the problem due to the fact that conventional infrared printer ports are designed to communicate horizontally, whereas a near vertical communication is necessary with a transponder 16.

An infrared printer port 30 is usually placed, as shown, at the back of a laptop computer 20. In order to vertically reorient the almost horizontal beams of the infrared port, the back of the computer may be provided with a mirror 32 pivotally connected beneath the infrared port. The user will orient mirror 32 according to his location beneath the transponder. Mirror 32 may be arranged in a flap which is sometimes provided to protect the connectors at the back of a laptop.

This arrangement requires the user not to tilt the laptop screen too far back, hiding the mirror from the transponder, and to orient the laptop towards the transponder in a horizontal plane. If this cannot be achieved, because the transponder is directly above or behind the user, the latter may employ a separate mirror 34, shown in the form of a prism, placed at a distance behind the laptop.

The adjustment of the mirror may be simplified by the fact that visible light is also transmitted from the location of the transponder, i.e. from the light bulb to which the transponder is associated. The user will thus orient the mirror so that the light coming from the bulb hits the infrared port. The adjustment may also be software assisted, based on the intensity measured by the infrared receiving device.

However, adjusting the mirror may become a hassle, because it has to be reoriented each time the laptop is moved. To simplify the adjustment, and even avoid it in some cases, the mirror preferably has light dispersing properties (a convex surface or grainy texture). The surface of the mirror may then be arranged to have a preferential orientation, i.e. such that the reflected intensity is maximum at an optimal angle of the mirror, and decreases as the angle of the mirror is changed. Such a surface is obtained, for instance, by providing a flat central portion surrounded by a convex portion.

Although the use of a single transponder was described herein, it is of course possible to use several such transponders to cover large areas. In this case, measures should be taken to avoid interference arising in areas where computers "see" more than one transponder. Such measures could be similar to those disclosed in US patent N° 4,975,926.

The term "light bulb" used herein is intended to cover any light device which directly connects to a standard socket, such as a screw bulb, a neon tube, and others.

Having thus described at least one illustrative embodiment of the invention, various alterations, modifications, and improvements will readily occur to those skilled in the art. Such alterations, modifications, and improvements are intended to be within the spirit and scope of the invention. Accordingly, the foregoing description is by way of example only and is not intended to be limiting. The invention is limited only as defined in the following claims and the equivalents thereto.

## Claims

1. An infrared local area network transponder adapted to receive its power supply from a standard light bulb socket.

2. The transponder of claim 1 integrated within a light bulb.

3. The transponder of claim 1 integrated within an adapter arranged to be inserted between a light bulb and its socket.

4. An infrared local area network (LAN) comprising:
• at least one infrared transponder according to any of claims 1-3 arranged in a wall or ceiling socket; and
• at least one computer equipped with infrared transmission and reception means within the vision angle of the transponder.

5. The infrared LAN of claim 4, comprising an infrared transmission and reception device within the vision angle of the transponder and coupled to a wired LAN.

6. The infrared LAN of claim 4, wherein the infrared transmission and reception means of the computer is an infrared printer port.

7. The infrared LAN of claim 6, wherein a mirror is arranged to suitably orient the infrared beams exchanged between the printer port and the transponder.

8. The infrared LAN of claim 7, wherein the mirror is in the form of a flap pivotally attached to the computer.

9. The infrared LAN of claim 7 or 8, wherein the mirror has a light dispersing surface.
